# EUROPÄISCHE PATENTSCHRIFT

(11) **EP 1 843 441 B1**
(45) Veröffentlichungstag und Bekanntmachung des Hinweises auf die Patenterteilung: **01.08.2012**
(21) Anmeldenummer: 07100895.7
(22) Anmeldetag: 22.01.2007
(51) Int. Cl.: H02G 3/22, H02G 3/08

(54) **Dichtung für eine Gehäusedurchführung für ein Kabel**
Grommet for a casing opening for a cable
Joint pour un passage de boîtier pour câble

(30) Priorität: 18.03.2006 DE 202006004314 U; 21.11.2006 DE 202006017659 U
(43) Veröffentlichungstag der Anmeldung: 10.10.2007
(73) Patentinhaber: Weidmüller Interface GmbH & Co. KG, 32758 Detmold (DE)
(72) Erfinder: Stuckmann, Peter, 32791 Lage (DE); Arlitt, Uwe, 33818 Leopoldshöhe (DE); Russo, Paulo, 32791 Lage (DE); Witt, John, 32760 Detmold (DE); Lucht, Günter, 32805 Horn-Bad Meinberg (DE); Bury, Joachim, 32052 Herford (DE); Salomon, Thomas, 33330 Gütersloh (DE); Diekmann, Torsten, 33818 Leopoldshöhe (DE); Wedler, Andreas, 32756 Detmold (DE); Pieper, Thomas, 59590 Geseke (DE)
(74) Vertreter: Dantz, Jan Henning

(56) Entgegenhaltungen:
- FR-A1- 2 723 162
- US-A- 3 836 269

## Beschreibung

Die Erfindung betrifft eine Dichtung für eine Gehäusedurchführung für ein Kabel, die als geteiltes Dichtelement ausgebildet ist, nach dem Oberbegriff des Anspruchs 1.

Geteilte Dichtungen für Gehäusedurchführungen sind aus dem Stand der Technik an sich bekannt, so aus der US 3,836,269.

An den bekannten geteilten Dichtungen für Wanddurchführungen ist nachteilig, dass gelegentlich am Innenumfang der ringartigen Dichtungen im Anlagebereich zum Kabel hin Undichtigkeiten auftreten.

Die Lösung dieses Problems ist die Aufgabe der Erfindung.

Die Erfindung löst diese Aufgabe durch den Gegenstand des Anspruchs 1.

Durch die Vorsprünge wird einer Spaltbildung am Innenumfang, welche die Ursache für einen wesentlichen Teil der Dichtungsprobleme am Innenumfang der geteilten Dichtung wird, auf einfache Weise entgegengewirkt, da die Vorsprünge den Bereich, in dem sich ein Spalt zwischen den Dichtsegmenten bilden könnte, überbrücken.

Besonders vorteilhaft ist es, wenn die Vorsprünge sich axial und/oder auch radial nicht über den gesamten Bereich der Dichtsegmente erstrecken. Hierdurch wird besonders gezielt zum Innenumfang hin die Dichtwirkung optimiert.

Vorteilhafte Ausgestaltungen der Erfindung sind den Unteransprüchen zu entnehmen.

Nachfolgend wird die Erfindung unter Bezug auf die Zeichnung anhand von Ausführungsbeispielen näher erläutert. Es zeigt:

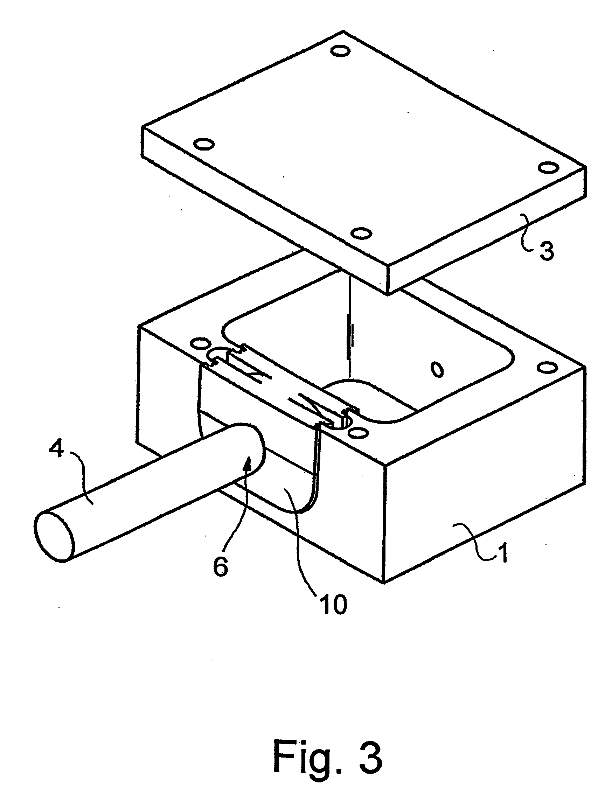

- Fig. 1 bis 3: Elemente einer Wanddurchführung während mehrerer aufeinanderfolgender Montageschritte;
- Fig. 4: eine perspektivische Ansicht der Dichtung der Wanddurchführung aus Fig. 1 bis 3;
- Fig. 5 und 6: verschiedene Schnittansichten der Dichtung aus Fig. 3 und Detailvergrößerungen dieser Schnittansichten;
- Fig. 7: eine Ansicht eines weiteren Ausführungsbeispiels einer erfindungsgemäßen Dichtung; und
- Fig. 8a-c: verschiedene Ansichten einer weiteren Dichtung und ein Gehäuse.

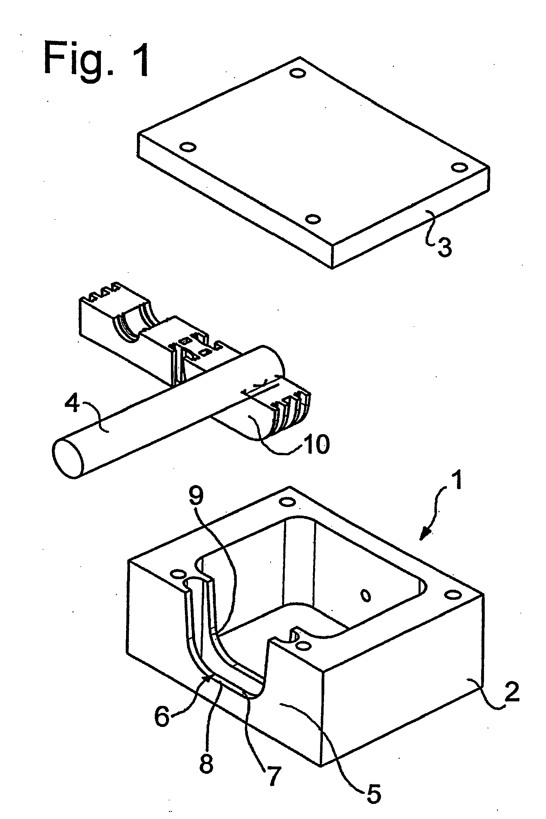

Fig. 1 zeigt ein Gehäuse 1 mit einem Grundteil 2 und einem (z.B. auf dieses aufschraubbaren) Deckelteil 3 zum Verschließen des Grundteils 2.

Das Gehäuse 1 kann zur Aufnahme an sich beliebiger Bauelemente dienen, die Anschlusselemente zum Anschluss der Leiter eines Kabels 4 umfassen können.

Eine Wand 5 des Gehäuses ist zur Realisierung einer Gehäusedurchführung 6 mit einer Öffnung versehen, die hier beispielhaft als Aussparung 7 im zum Deckelteil 3 weisenden Randbereich der Wand 5 ausgebildet ist.

Die Wand 5 ist zumindest im Randbereich der Öffnung, hier der Aussparung 7, zweischichtig als eine Art Doppelrand mit zwei senkrecht zur Wandfläche zueinander beabstandeten Innenrändern 8, 9 ausgebildet. Im Deckelteil 3 kann ein entsprechender Doppelrand ausgebildet sein bzw. an diesem angeordnet sein (hier nicht zu erkennen).

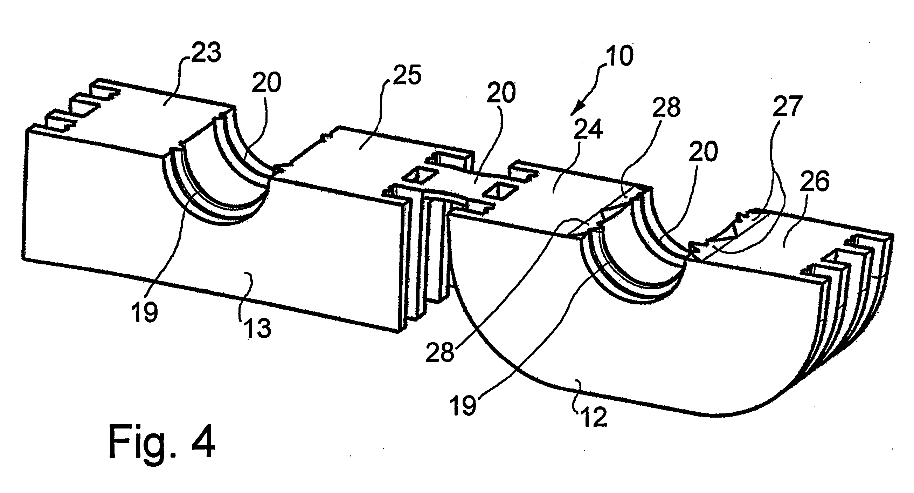

Die Aussparung 7 wird im montierten Zustand von dem Kabel 4 durchsetzt, wobei zwischen dem Außenumfang des Kabels 4 und den beiden Innenrändern 8, 9 der Aussparung 7 ein geteiltes Dichtelement 10 angeordnet ist, dass vergrößert in Fig. 4 dargestellt ist.

Das geteilte Dichtelement 10 besteht aus zwei Dichtsegmenten 12, 13, die hier über ein Filmscharnier 14 einstückig miteinander verbunden sind und die einander im montierten Zustand zum vollen 360°-Dichtelement ergänzen, der das Kabel 4 rundum einschließt. Das Kabel 4 kann wie hier dargestellt ein Rundkabel oder aber auch ein Flachkabel sein oder eine sonstige Geometrie aufweisen (z.B. oval), wobei das Konzept der Dichtsegmente jeweils entsprechend beibehalten würde.

Die Dichtsegmente 12, 13 sind hier jeweils als Ringhälften ausgebildet, die sich über einen Winkel von 180° erstrecken und die zusammen um das Kabel herum einen 360°-Ring bilden.

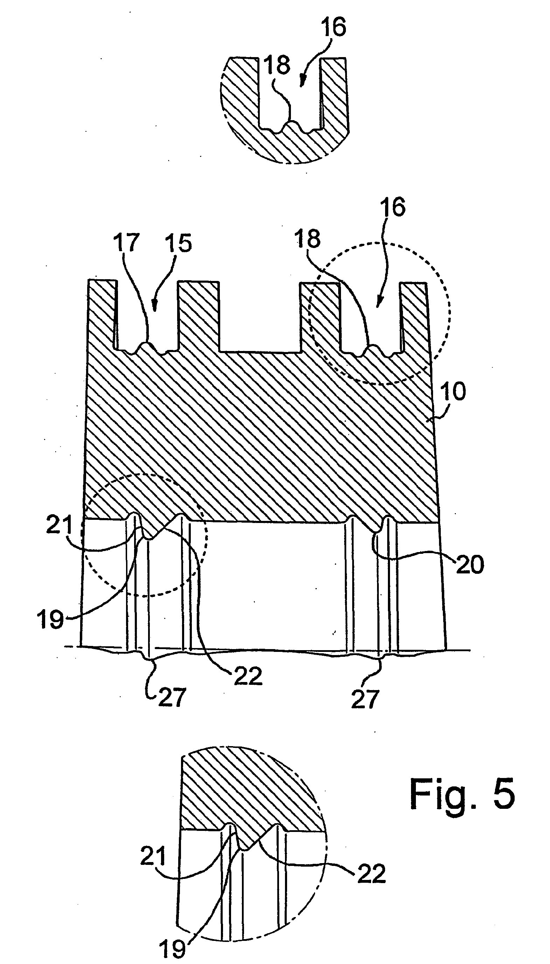

An ihrem Außenumfang - siehe Fig. 5 - sind die Dichtsegmente 12, 13 jeweils mit radial verlaufenden Nuten 15, 16 versehen, die dazu ausgelegt sind, jeweils formschlüssig einen der Innenränder 8, 9 des Gehäuses aufnehmen. Am Grund der Nuten 15, 16 ist jeweils ein umlaufender Wulst 17, 18 ausgebildet, der dazu dient, die Dichtwirkung zu erhöhen.

Am Innenumfang der Dichtsegmente 12, 13 sind ferner zwei stegartige Ringwulste 19, 20 ausgebildet, die dazu ausgelegt sind, jeweils eine definierte linienartige Anlage am Innenumfang der Dichtsegmente 12, 13 am Kabel 4 zu realisieren, um auch in diesem Bereich eine genügende Dichtwirkung sicherzustellen. Die Ringwulste 19, 20 weisen im Querschnitt der Fig. 5 eine angenäherte Dreiecksform auf, wobei die beiden Seitenflächen 21, 22 unterschiedlich stark zur Wandebene geneigt sind, was wiederum die Dichtwirkung verbessert.

Die Dichtsegmentflächen 23, 24, 25, 26, mit welchen die Dichtsegmente 12, 13 im montierten Zustand aneinander liegen, sind im Wesentlichen eben ausgebildet bzw. bilden eine (jeweils an jedem Ringssegment vorzugsweise gemeinsame, radiale) Ebene E, so dass sich die Dichtsegment 12, 13 im montierten Zustand an sich zum vollständigen Ringelement ergänzen.

Da jedoch der Effekt auftritt, dass sich zum Innenumfang hin gelegentlich ein Spalt zwischen den aneinander zur Anlage kommende Dichtsegmentflächen 23 - 26 bildet, ist vorgesehen, dass wenigstens eine oder mehrere - insbesondere zwei oder sogar alle - der Dichtsegmentflächen 23 -26 zum Innenumfang hin nicht eben verlaufen sondern Vorsprünge 27, 28 aufweisen, die etwas (insbesondere mehr als 0,5 mm, vorzugsweise ca. 0,8 mm) über die Ebene E (in Richtung des anderen Dichtsegmentes) der ansonsten ebenen Dichtsegmentflächen 23 bis 26 vorstehen. Dabei steigt die Höhe der Vorsprünge 27 vorzugsweise radial von außen nach innen an.

Vorzugsweise beträgt das Volumen der Vorsprünge 27 weniger als 0,01%, insbesondere weniger als 0,005% des Gesamtvolumens der Dichtsegmente 12, 13.

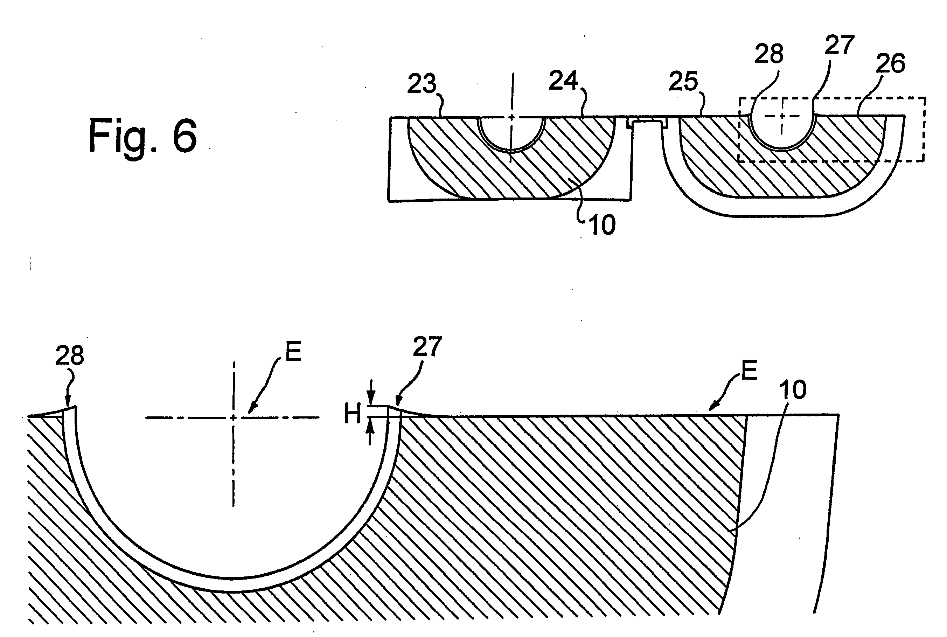

Nach Fig. 4 bis 6 sind die Vorsprünge 27 im Wesentlichen im Bereich der Ringwülste 19, 20 ausgebildet und erstrecken sich nicht über den gesamten - in Hinsicht auf die Erstreckung des Kabels 4 - axialen Bereich des Innenumfangs der Dichtsegmente 12, 13. Es ist vorteilhaft, wenn die Vorsprünge 27 axial jeweils seitlich der Ringwulste 19, 20 ansetzen und wenn deren Höhe axial im Bereich der Ringwulste 19, 20 zu einem Maximum ansteigt, da dies zu einer besonders optimalen Dichtwirkung und Verhinderung der Spaltwirkung beiträgt.

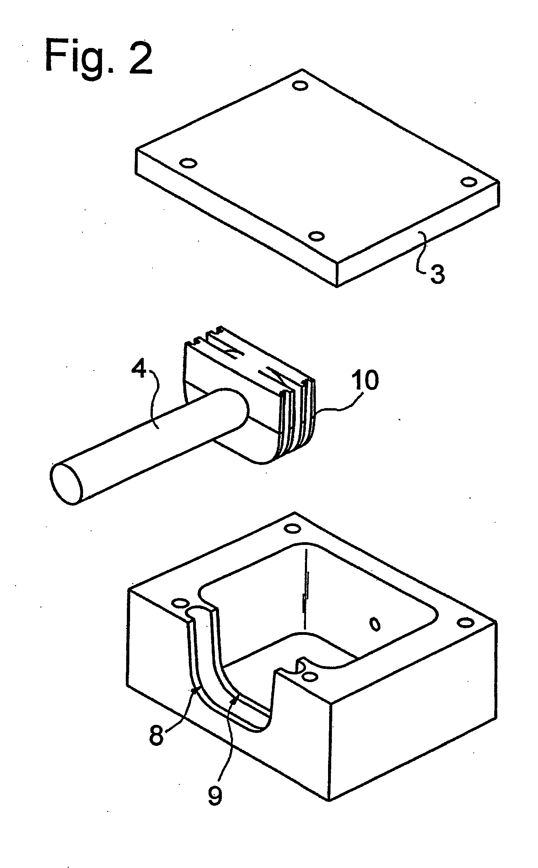

Bei der Montage wird zunächst das Kabel 4 in eines der Dichtsegmente 12 gelegt (Fig. 1) und dann das zweite Dichtsegment 13 aufgeklappt (Fig. 2). Sodann wird die derart vormontierte Anordnung in die Aussparung 7 der Wand 5 gesetzt.

Jetzt wird das Gehäuseteil 2 mit dem Deckelteil 3 verschlossen, wobei die Dichtsegmente 12, 13 aufeinander gedrückt werden. Insbesondere zum Kabel hin werden durch den leichten realisierten Materialüberstand bzw. die jetzt komprimierten Vorsprünge 27 Spaltbildungen, welche die Dichtwirkung beeinträchtigen könnten, auf einfache Weise vermieden.

Die Aussparung 7 weitet sich zum Rand hin auf (z.B. konisch zum Deckel hin). Der Dichtkörper der Dichtung bzw. des Dichtelementes 10 ist unten abgerundet ausgebildet und seitlich vorzugsweise ganz oder im Wesentlichen parallel, d.h. er folgt der sich aufweitenden Kontur nicht oder nicht ganz. Wird daher nach dem Montieren der Dichtung 10 jetzt das Deckelteil 3 aufgesetzt, entsteht der Effekt, dass die Gummilippen bzw. Vorsprünge auch von der Seite auf die Kabel- bzw. Leiteroberfläche gepresst werden, was sich ergänzend vorteilhaft auswirkt.

Der Materialüberstand der Vorsprünge 27, 28 ist derart bemessen, dass diese sich ohne weiteres so weit komprimieren lassen, so dass das direkte Aufeinanderliegen der Dichtsegmentflächen 23 - 26 im montierten Zustand nicht behindert wird.

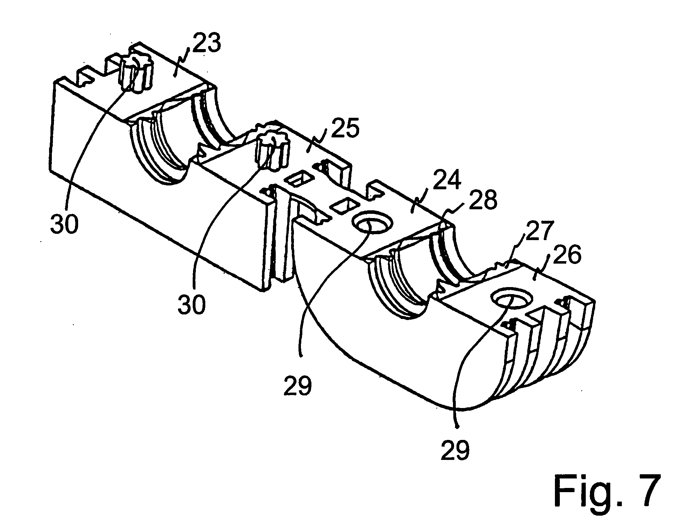

Bei dem Ausführungsbeispiel der Fig. 7 sind jeweils zwei der Dichtsegmentflächen 23, 25 mit vorkragenden Vorsprüngen, insbesondere nach Art von Noppen 30, versehen und die korrespondierenden Dichtsegmentflächen 24, 26 mit diese Noppen 28 im zusammengeklappten Zustand der Dichtung aufnehmenden Löchern 29, so dass der Sitz und Zusammenhalt der Dichtung im zusammengeklappten Zustand optimiert wird. Dies ist bei der Vorkonfektionierung am Leiter vorteilhaft, da die Dichtung derart am Leiter gehalten ist. Darüber hinaus ergibt sich eine Zentrierung und eine Erleichterung der Montage.

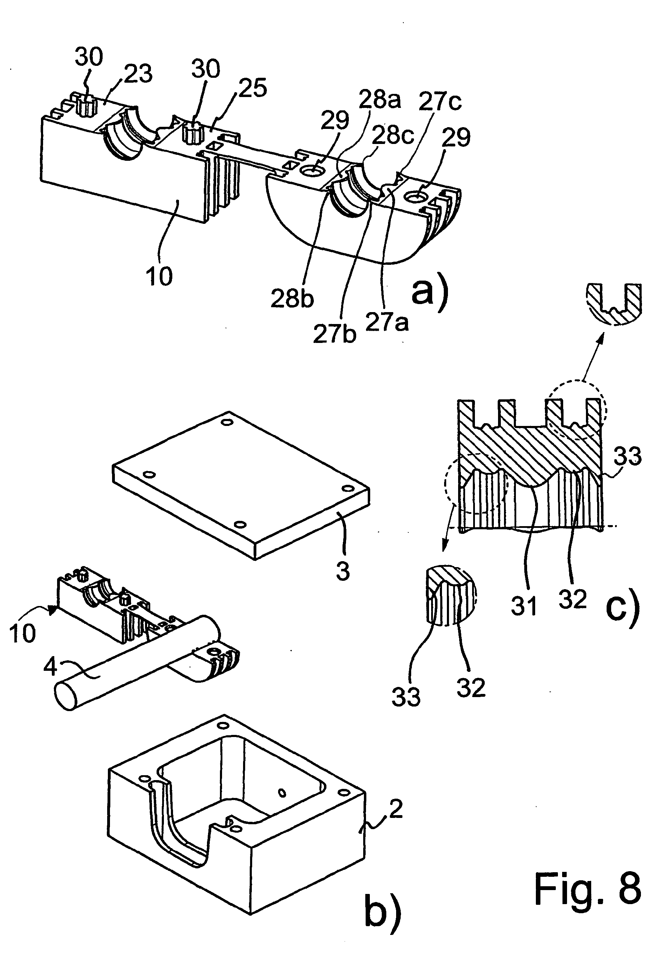

Auch bei dem Ausführungsbeispiel der Fig. 8 sind jeweils zwei der Dichtsegmentflächen 23, 25 mit vorkragenden Vorsprüngen nach Art von Noppen 30 versehen und die korrespondierenden Dichtsegmentflächen 24, 26 mit diese Noppen 28 im zusammengeklappten Zustand der Dichtung aufnehmenden Löchern 29.

Zudem sind die Dichtsegmentflächen 23 -26 - vorzugsweise alle - zudem zum Innenumfang hin wiederum mit den Vorsprüngen 27, 28 versehen, wobei jeweils in axialer Richtung am Innenumfang im mittleren Bereich ein erster Vorsprung 27a, 28a als Fortsatz einer mittleren Innenumfangs-Ringwulst 31 mit vorzugsweise abgeflachter, beispielsweise parabelförmiger Form vorgesehen ist. An die mittlere Ringwulst 31 schließen sich seitlich wellenartig kleinere Ringwulste 32 an. Seitlich schließen sich an diese schließlich höhere Rand-Ringwulste 33 zu den beiden inneren und äußeren Stirnseiten hin an, die im Bereich der Dichtsegmentflächen 23 bis 26 wiederum in Vorsprünge 27b, 28b übergehen, so dass sich eine besonders vorteilhafte kombinierte Dichtwirkung, gerade auch zu den Stirnflächen hin, ergibt.

Auch hier sind die Vorsprünge 27, 28 wiederum nur oder im Wesentlichen nur im Bereich der Ringwulste 31 und 33 ausgebildet, so dass sie sich axial nicht über den gesamten Bereich des Innenumfangs der Dichtsegmente 12, 13 erstrecken.

### Bezugszeichen

- Gehäuse: 1
- Grundteil: 2
- Deckelteil: 3
- Kabel: 4
- Wand: 5
- Gehäusedurchführung: 6
- Aussparung: 7
- Ränder: 8, 9
- Dichtelement: 10
- Dichtsegmente: 12, 13
- Nuten: 15, 16
- Wulst: 17, 18, 19, 20
- Seitenflächen: 21, 22
- Dichtsegmentflächen: 23, 24, 25, 26
- Vorsprünge: 27, 28
- Löcher: 29
- Noppen: 30
- Ringwulste: 31 bis 33

- Ebene: E

## Patentansprüche

1. Dichtung für eine Gehäusedurchführung für ein Kabel (4), die als geteiltes Dichtelement (10) ausgebildet ist, das wenigstens zwei Dichtsegmente (12, 13) mit Dichtsegmentflächen (23, 24, 25, 26) aufweist, an denen welchen die Dichtsegmente (12, 13) im montierten Zustand aneinander liegen, welche jeweils zumindest im wesentlichen eine ebene Fläche (Ebene E) aufweisen, wobei wenigstens eine oder mehrere - insbesondere alle - der Dichtsegmentflächen (23 - 26) wenigstens einen einen Materialüberstand bildenden Vorsprung oder mehrere wenigstens einen Materialüberstand bildende Vorsprünge (27, 28) aufweisen, die im unmontierten Zustand etwas über die ansonsten ebene Fläche (Ebene E) vorstehen, **dadurch gekennzeichnet, dass**
a) die Dichtsegmente (12, 13) an ihrem Außenumfang jeweils mit radial verlaufenden Nuten (15, 16) versehen sind, die dazu ausgelegt sind, jeweils formschlüssig einen der Ränder (8, 9) eines Doppelrandes einer Gehäusewandung aufnehmen,
b) wobei die Dichtsegmentflächen (23 -26) zum Innenumfang hin mit den Vorsprüngen (27, 28) versehen sind,
d) wobei jeweils in axialer Richtung am Innenumfang im mittleren Bereich ein erster Vorsprung (27a, 28a) als Fortsatz einer mittleren Innenumfangs-Ringwulst (31) vorgesehen ist und
c) wobei sich an die die mittlere Ringwulst (31) seitlich wellenartig kleinere Ringwulste (32) anschließen und wobei sich seitlich an diese höhere Rand-Ringwulste (33) zu den beiden inneren und äußeren Stirnseiten hin anschliessen, die im Bereich der Dichtsegmentflächen (23 bis 26) wiederum in Vorsprünge (27b, 28b) übergehen.

2. Dichtung nach Anspruch 1, **dadurch gekennzeichnet, dass** die Vorsprünge (27, 28) mehr als 0,5 mm, vorzugsweise ca. 0,8 mm, über die ebene Fläche (Ebene E) vorstehen.

3. Dichtung nach Anspruch 1 oder 2, **dadurch gekennzeichnet, dass** lediglich die Dichtsegmentflächen (23 - 26) von einem der beiden Ringssegmente (12) mit den Vorsprüngen (27, 28) versehen sind.

4. Dichtung nach einem der vorstehenden Ansprüche, **dadurch gekennzeichnet, dass** sämtliche der Dichtsegmentflachen (23 - 26) der beiden Ringssegmente (12, 13) mit den Vorsprüngen (27, 28) versehen sind.

5. Dichtung nach einem der vorstehenden Ansprüche, **dadurch gekennzeichnet, dass** das Volumen der Vorsprunge (27, 28) weniger als 0,01%, insbesondere weniger als 0,005%, des Gesamtvolumens der Dichtsegmente (12, 13) beträgt.

6. Dichtung nach einem der vorstehenden Ansprüche, **dadurch gekennzeichnet, dass** die Höhe der Vorsprünge (27, 28) radial von außen nach innen zum Kabel (4) hin ansteigt.

7. Dichtung nach einem der vorstehenden Ansprüche, **dadurch gekennzeichnet, dass** am Innenumfang der Dichtsegmente (12,13) die Ringwulst(e) (19, 20) ausgebildet ist/sind, der/die dazu ausgelegt ist/sind, jeweils eine definierte linienartige Anlage der Dichtsegmente (12, 13) am Kabel (4) zu realisieren.

8. Dichtung nach einem der vorstehenden Ansprüche, **dadurch gekennzeichnet, dass** die Ringwulste im Querschnitt eine angenäherte Dreiecksform aufweisen, wobei die beiden Seitenflächen (21, 22) unterschiedlich stark geneigt sind.

9. Dichtung nach einem der vorstehenden Ansprüche, **dadurch gekennzeichnet, dass** die Vorsprünge (27, 28) axial jeweils seitlich der Ringwulste (19, 20) ansetzen und zu einer maximalen Höhe im Bereich der Ringwulste (19, 20) ansteigen.

10. Dichtung nach einem der vorstehenden Ansprüche, **dadurch gekennzeichnet, dass** die Dichtsegmente (12, 13) als Ringhälften ausgebildet sind, die sich über einen Winkel von 180° erstrecken.

11. Dichtung nach einem der vorstehenden Ansprüche, **dadurch gekennzeichnet, dass** die Dichtsegmente (12, 13) über ein Filmscharnier (14) einstückig miteinander verbunden sind.

12. Dichtung nach einem der vorstehenden Ansprüche mit Gehäuse, **dadurch gekennzeichnet, dass** sich die Aussparung (7) zum Deckel hin aufweitet.

13. Dichtung nach einem der vorstehenden Ansprüche mit Gehäuse, **dadurch gekennzeichnet, dass** sich die Aussparung (7) zum Deckel hin konisch aufweitet.

14. Dichtung nach einem der vorstehenden Ansprüche mit Gehäuse, **dadurch gekennzeichnet, dass** eine oder vorzugsweise zwei der Dichtsegmentflächen (23, 25) mit vorkragenden Vorsprüngen, insbesondere nach Art von Noppen (28), versehen ist/sind und die korrespondierenden Dichtsegmentflächen (24, 26) mit einem oder zwei diese Noppen (30) im zusammengeklappten Zustand der Dichtung aufnehmenden Loch/Löchern (29).

## Claims

1. Seal for a housing bushing for a cable (4), which seal is designed as a split sealing element (10) comprising at least two sealing segments (12, 13) with sealing segment surfaces (23, 24, 25, 26) on which the sealing segments (12, 13) lie on each other in the assembled state and each of which has an at least substantially flat surface (plane E), wherein one or more - in particular all - of the sealing segment surfaces (23-26) has/have one or more projections (27, 28) forming a material overhang and projecting slightly from the otherwise flat surface (plane E) in the disassembled state, **characterised in that**
a) each of the sealing segments (12, 13) is provided with radially extending grooves (15, 16) at its outer circumference, which are designed for the positive location of the edges (8, 9) of a double edge of a housing wall,
b) wherein the sealing segment surfaces (23-26) are provided with the projections (27, 28) towards the inner circumference,
c) wherein in each case a first projection (27a, 28a) is provided as an extension of a central inner circumference toroid (31) is provided in the axial direction on the inner circumference in the central region, and
d) wherein smaller toroids (32) laterally adjoin the central toroid (31) in the manner of waves and wherein these are adjoined laterally by higher edge toroids (33) towards the inner and outer end faces, these in turn merging into projections (27a, 28b) in the region of the sealing segment surfaces (23 to 26).

2. Seal according to claim 1, **characterised in that** the projections (27, 28) project beyond the flat surface (plane E) by more than 0.5 mm, preferably by approximately 0.8 mm.

3. Seal according to claim 1 or 2, **characterised in that** only the sealing segment surfaces (23-26) of one of the two annular segments (12) are provided with the projections (27, 28).

4. Seal according to any of the preceding claims, **characterised in that** all of the sealing segment surfaces (23-26) of the two annular segments (12, 13) are provided with the projections (27, 28).

5. Seal according to any of the preceding claims, **characterised in that** the volume of the projections (27, 28) amounts to less than 0.01%, in particular to less than 0.005%, of the overall volume of the sealing segments (12, 13).

6. Seal according to any of the preceding claims, **characterised in that** the height of the projections (27, 28) increases radially from the outside inwards towards the cable (4).

7. Seal according to any of the preceding claims, **characterised in that** the toroid(s) (19, 20) designed to implement a defined linear contact of the sealing segments (12, 13) on the cable (4) is/are formed on the inner circumference of the sealing segments (12, 13).

8. Seal according to any of the preceding claims, **characterised in that** the toroids have an approximately triangular shape in cross-section, the two lateral surfaces (21, 22) having different degrees of inclination.

9. Seal according to any of the preceding claims, **characterised in that** the projections (27, 28) axially start at the sides of the toroids (19, 20) and increase to a maximum height in the region of the toroids (19, 20).

10. Seal according to any of the preceding claims, **characterised in that** the sealing segments (12, 13) are designed as half-rings extending over an angle of 180 degrees.

11. Seal according to any of the preceding claims, **characterised in that** the sealing segments (12, 13) are joined to each other by a film hinge (14) to form a single piece.

12. Seal according to any of the preceding claims, comprising a housing, **characterised in that** the cut-out (7) widens towards the cover.

13. Seal according to any of the preceding claims, comprising a housing, **characterised in that** that the cut-out (7) widens conically towards the cover.

14. Seal according to any of the preceding claims, comprising a housing, **characterised in that** one or preferably two of the sealing segment surfaces (23, 25) is/are provided with protruding projections, in particular designed as knobs (28), and the corresponding sealing segment surfaces (24, 26) are provided with one or two hole(s) accommodating these knobs (30) in the folded state of the seal.

## Revendications

1. Joint pour un passage de boîtier pour un câble (4) qui est réalisé comme un élément étanche (10) divisé qui présente au moins deux segments étanches (12, 13) avec des surfaces de segment étanche (23, 24, 25, 26), sur lesquelles les segments étanches (12, 13) reposent l'un sur l'autre à l'état monté, lesquels présentent respectivement au moins sensiblement une surface plane (plan E), sachant qu'au moins une ou plusieurs, en particulier toutes, les surfaces de segment étanche (23-26) présentent au moins une saillie formant une projection de matériau ou plusieurs saillies (27, 28) formant au moins une projection de matériau qui dépassent un peu de la surface sinon plane (plan E) à l'état non monté, **caractérisé en ce que**
a) les segments étanches (12, 13) sont respectivement pourvus, sur leur périphérie extérieure, de rainures (15, 16) s'étendant radialement qui sont configurées afin de recevoir respectivement par complémentarité de formes l'un des bords (8, 9) d'un double bord d'une paroi de boîtier,
b) sachant que les surfaces de segment étanche (23-26) sont pourvues de saillies (27, 28) vers la périphérie intérieure,
d) sachant qu'une première saillie (27a, 28a) est prévue en prolongement d'un tore (31) médian de périphérie intérieure respectivement dans le sens axial sur la périphérie intérieure dans la zone médiane et
c) sachant que de plus petits tores (32) ondulés latéralement sont contigus au tore (31) médian et sachant que des tores de bord (33) plus grands sont latéralement contigus à ceux-ci vers les deux côtés avant intérieurs et extérieurs qui se transforment dans la zone des surfaces de segment étanche (23 à 26) de nouveau en saillies (27b, 28b).

2. Joint selon la revendication 1, **caractérisé en ce que** les saillies (27, 28) dépassent de plus de 0,5 mm, de préférence d'environ 0,8 mm de la surface plane (plan E).

3. Joint selon la revendication 1 ou 2, **caractérisé en ce que** juste les surfaces de segment étanche (23-26) de l'un des deux segments annulaires (12) sont pourvues de saillies (27, 28).

4. Joint selon l'une quelconque des revendications précédentes, **caractérisé en ce que** toutes les surfaces de segment étanche (23-26) des deux segments annulaires (12, 13) sont pourvues de saillies (27, 28).

5. Joint selon l'une quelconque des revendications précédentes, **caractérisé en ce que** le volume des saillies (27, 28) s'élève à moins de 0,01 %, en particulier moins de 0,005 % du volume global des segments étanches (12, 13).

6. Joint selon l'une quelconque des revendications précédentes, **caractérisé en ce que** la hauteur des saillies (27, 28) augmente radialement de l'extérieur vers l'intérieur vers le câble (4).

7. Joint selon l'une quelconque des revendications précédentes, **caractérisées en ce que** le ou les tores(s) (19, 20) sont réalisés sur la périphérie intérieure des segments étanches (12, 13), lequel ou lesquels sont configurés afin de réaliser respectivement un appui linéaire défini des segments étanches (12, 13) contre le câble (4).

8. Joint selon l'une quelconque des revendications précédentes, **caractérisé en ce que** la section transversale des tores présente une forme triangulaire approximative, sachant que les deux surfaces latérales (21, 22) sont inclinées de manière très différente.

9. Joint selon l'une quelconque des revendications précédentes, **caractérisé en ce que** les saillies (27, 28) sont placées axialement respectivement latéralement des tores (19, 20) et s'élèvent à une hauteur maximale dans la zone des tores (19, 20).

10. Joint selon l'une quelconque des revendications précédentes, **caractérisé en ce que** les segments étanches (12, 13) sont réalisés comme des moitiés annulaires qui s'étendent sur un angle de 180°.

11. Joint selon l'une quelconque des revendications précédentes, **caractérisé en ce que** les segments étanches (12, 13) sont reliés entre eux d'un seul tenant par une charnière à film (14).

12. Joint selon l'une quelconque des revendications précédentes avec un boîtier, **caractérisé en ce que** l'évidement (7) s'élargit vers le couvercle.

13. Joint selon l'une quelconque des revendications précédentes avec un boîtier, **caractérisé en ce que** l'évidement (7) s'élargit en forme de cône vers le couvercle.

14. Joint selon l'une quelconque des revendications précédentes avec un boîtier, **caractérisé en ce qu'**une ou de préférence deux des surfaces de segment étanche (23, 25) est ou sont pourvues de saillies en porte-à-faux, en particulier à la manière de nopes (28) et les surfaces de segment étanche (24, 26) correspondantes sont pourvues d'un ou deux trous (29) recevant ces nopes (30) à l'état replié du joint.
